# EUROPEAN PATENT APPLICATION

(11) **EP 1 860 072 A2**
(43) Date of publication of application: **28.11.2007**
(21) Application number: 07425191.9
(22) Date of filing: 30.03.2007
(51) Int. Cl.: C02F 1/52, E03F 5/14, C02F 11/04

(54) **Phosphor removal from detergents wastewater and greywater recycling system for flushing toilets**

(30) Priority: 22.05.2006 IT CE20060014
(71) Applicant: Pezone, Luigi Antonio, 81055 Santa Maria, Capua Vetere (CE) (IT)
(72) Inventor: Pezone, Luigi Antonio, 81055 Santa Maria, Capua Vetere (CE) (IT)

(57) **Abstract**

"Water reclaim plant for the WC cleaning", has a chemical conditioning with lime with physical treatments of water. The new method destroys the phosphorous, that is the cause of many environmental damages .

The recirculation has been now applied also to those public places like the motorway service stations, train stations, cinemas, etc...where washbasins water used everyday by million of people is discharged into the sewage or treated on very expensive depurative plants. It could be now reused locally to feed the WC flushing systems of the same place. The accumulation in the maxi boxes and the camouflage of all plant components render the whole invisible and useful.

Nowadays do not exist similar reclaim water and treatment water systems: they are miniaturized, camouflaged and low - priced.

## Description

The writer and patent holder n. CE2006A000014 of May 22, 2006 having as title "water reclaim plant for the WC cleaning" for the reclaim of home sanitary water with max. flows of 15 1/min., claims the partial priority of the project and has studied further innovations applicable every day by common people. They could in this way reclaim water and improve the environmental situation.

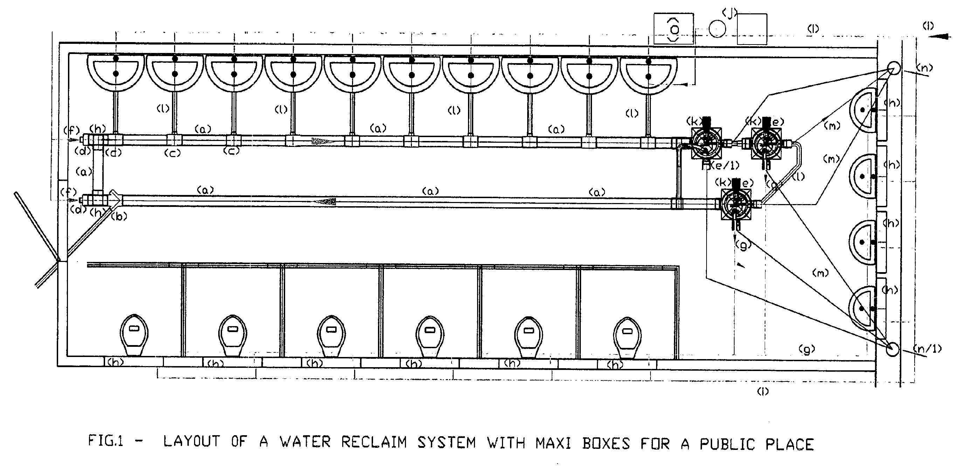

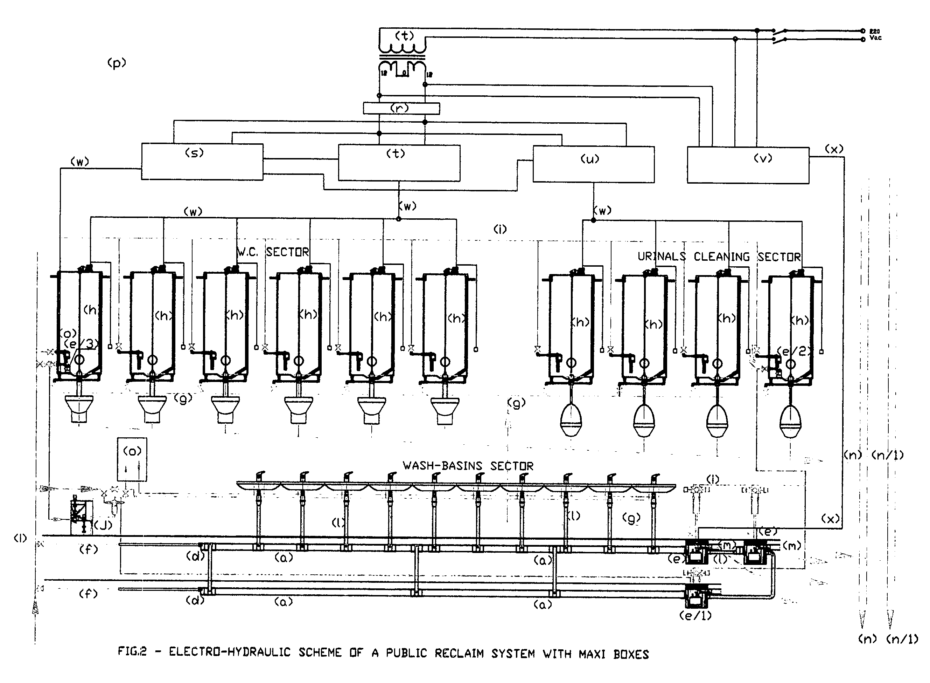

The printouts illustrated in the lay-out drawings (FIG.1) and the electro-hydraulic scheme (FIG.2) refer to a public place in which the reclaim of water used for the personal hygiene is applied as well as its reutilization for the WC and urinals cleaning; it offers many technical innovations improved after a first intuition and can be applied both on house plants and in many other branches.

On a house plant the percentage of consume water reclaimable for the WC use represents the 25% of our per capita consumption. It is totally obtainable from the water used for the personal hygiene, about 35%, and it is less polluted than water coming from the kitchen. In public places the reclaim percentage reaches the 100% and the whole consumption is halved.

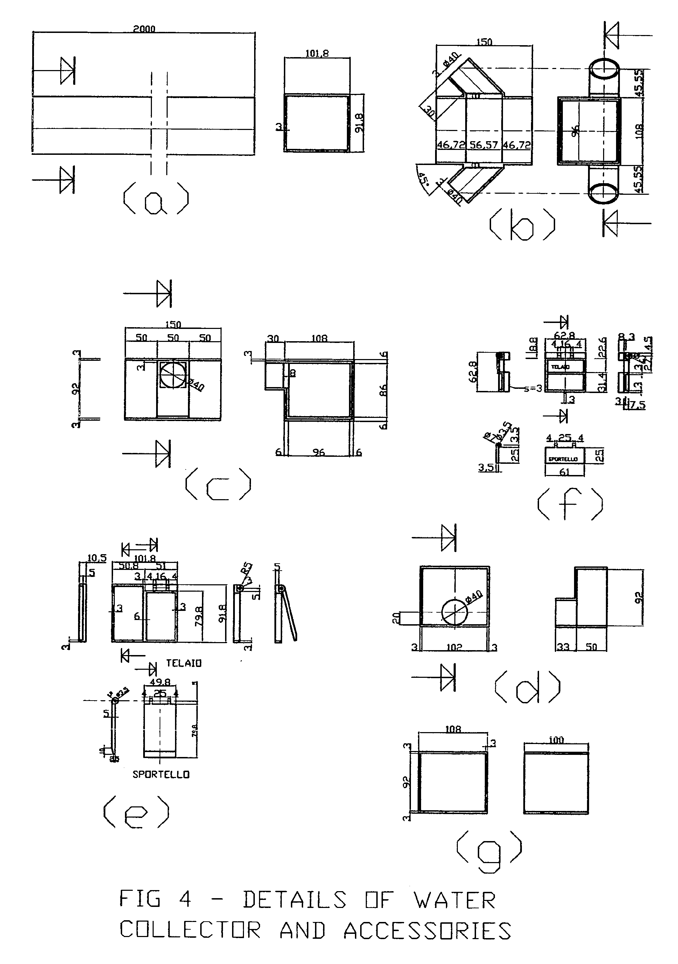

Important novelties are:
the chemical precipitation of the phosphorous present in the detergents and inserted in the recirculation phase can be broadened to the wastewater not directly involved in this process. As the phosphorous is one of the main components of the synthetic detergents and it is spreading in exponential way helping the euthophication of lakes and natural waters, it has been inserted in this project. The city wastewater can contain phosphorous till a max. of 20 mg/l of which the 75% is of inorganic nature; the secondary treatment (Imhoff) removes a max. of 2 mg/l and the whole remaining part is discharged into the final effluent. Considering that not all the effluents are depurated and not all the purification plants are efficient, the reasons of the phosphorous diffusion appear clear. The difficulties of the biological treatment plants active by means of micro-organisms are due to the slow process and it becomes slower by increasing the quantity to be treated. The process of a chemical removal is expensive and complex. The treatment with lime, moderately - priced, increases the pH of the sewage for the necessary contact time and it is not compatible with the other pollutants contained in the sewage. Other innovative procedures are in progress of experimentation but the undersigned thinks that neutralizing the detergents soon after their use and before mixing them with other polluting substances, simplifies the operation and, at the same time, cuts the prices by using lime. Small lime quantities, dosed in the collector used for the recirculation (fig. 4), reach the reaction point with the phosphates and let them precipitate in a mineral (hydrossil - apophyllite) extractible (with the calcium carbonate and with other secondary mud produced by adding lime) from the hydraulic ejector conceived in this project.

The mud with pH 11 is discharged into the faecal column rendering the depurative faeces process faster. It disinfects the cesspool wastewater and corrects the mud acidification. With this system the addition of lime in the cesspool will not be necessary after the expurgation.

The self - cleaning water filter removes the mud produced rendering ordinary cleaning unnecessary; other important novelties are:
flushing maxi boxes with partial draining allowing a water accumulation necessary for the recycling;
the water accumulation in the floor, necessary for a recirculation or for a contact with the coagulant, can be increased extending the collector or creating parallel lines. It is not stagnant and does not smell as it is placed in a strongly basic environment;
the small preparer of the coagulant solution with all the control devices at a low tension and the necessary accident - prevention devices allow its installation in a private environment; space is not necessary because the plant is compact and camouflaged in the walls and floor.

Nowadays similar plants do not exist. They are simple and targeted to a partial water reclaim or to the specific detergent treatment before its discharge.

Referring to the figures mentioned before, the functioning is the following: the waste water from the sinks are piped into an underground collector (a) and into more sumps (e) of standard dimensions, containing the necessary recycling equipment. These are then lifted to the maxi boxes where they are accumulated and then reused before being definitively unloaded into a sewer through WCs and urinals.

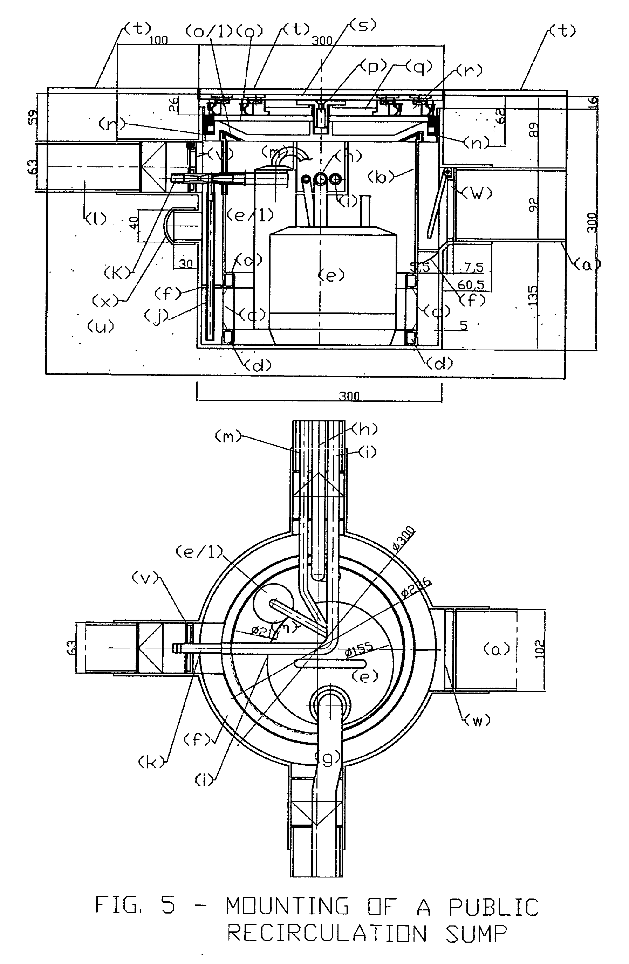

In the sump on fig. 5 a foam protection cylinder (b) holds the floating substances and makes the water pass through a filtering net (c). It is recalled by a lifting motor-driven pump (e). The heavy particles piped by the chute (f) sediment in the air space between the internal walls of the filter and the external wall of the cylinder, out of which they are regularly sucked up by an hydraulic ejector (k) fed by the water system or by compress air before being sent to the sewers.

The flushing system (with water) with a separate pipe (h) feeds 2 tubular rings with rectangular section. They are incorporated in the structure of the foam protection cylinder (b) and are provided with holes placed toward the filtering net (d) for the regular and timed filter cleaning.

The filter and sump cleaning will be effected in different moments. The cleaning of the filter can be planned, requires a few seconds (20 - 30 sec) and is effected with crossed sprinklings of water, located on the top and on the bottom, with an angle of 30° towards the filtering surface.

The cleaning water brings in the sump a further important, secondary effect: in a few seconds 4-5 changes of water (in volume) will be let from the sump into the sewer through an overflow, removing all the sedimentary and floating substances and cleaning the sump and foam protection cylinder walls.

The non-return door (v) located on the drainage toward the sewer (1) avoids the passage of bad smell while the door - frame in the discharge hole establishes the threshold of its skimming sustaining the ejector (k) with a calibrate hole; the door position (not on the sump wall but in the discharge hole) allows the taking apart of the ejector and of the cylinder; the door can be disassembled as well.

The cleaning of the sump with the hydraulic ejector (programmable) has an advantageous secondary effect. Through the introduction of a fluid under pressure into the waste pipe, eventual clogging are prevented. Both cleaning actions should take place at night not to interfere with its normal functioning.

The triple cleaning action (filter, sump and discharge pipe) renders the system totally free from manual cleaning. The sump will be then opened only in case of extraordinary maintenance caused by a damage of the lifting motor-driven pump (e). This will be detectable trough a warning light located on the control board.

A further device for the manual cleaning of the collector is located at its ends. It is provided with a direct connection to the water distribution collector through an interception valve (or solenoid valve in case of automatic cleaning) connected to the detail 4 through reduction PVC joints (d).

Each plant should be provided with at least 2 lifting sumps in order to prevent sudden streams of water, as it usually happens, and to have a reserve in case of pump damages. The sumps can be matched in series or in a parallel way thanks to the arrangements provided in the project of the sumps and matching accessories (FIG.4). Each sump allows a recirculation of about 100 litres per minute. In the fig.1 a third sump (e/1) is provided for. It allows a sewage recirculation that renders the coagulant diffusion in the dosing plant (1) uniform. This sump is similar to the others except for the pump use.

The single maxi box (FIG. 2-3-13-15) will be fed from the bottom and on both sides. In this way an upward flow is granted in the whole tank avoiding eventual sedimentations. For the same purpose the bottom has a hopper form that renders the flow towards the discharge and its cleaning easier thanks to the speed of water in the parts concerned by opening the outlet hole.

The new "maxi boxes" allow an accumulation of about 57 litres of water and 6-8 consecutive draining, corresponding to the common boxes, without using the water system. Once the supply of the reclaim water is over, the feeding will be led by the water system. This will be automatic, without the support of complex devices, through a ball cock overflow valve. The diaphragm, closing device is located at the bottom of the tank and therefore it is constantly kept closed by the level of the reclaim water.

As already known, the discharge hole of the maxi box is like a discharge mouth under head and its delivery depends upon the tank level that can vary from about 20 cm till a max. of 130 cm.

As the maxi box is under atmospheric pressure, the outlet delivery of the tank depends only upon the geodetic height. The outlet section of the box will therefore have a theoretical speed of 1,98m/sec and 5,05 m/sec, according to the known formula of the Bernoulli's theorem (V = √ 2xgxh); (without considering a further difference in level till the outlet and the localized discharge losses that would balance the difference of the final delivery, as these are proportional to the speed square) in order to balance the initial conditions between the min. and max. levels and to deliver approx. the same water quantities for each operation, the opening discharge time at a min. level should be 2.55 times higher than the max. level (5,05 / 1.98 = 2.55). The intermediate levels will be contained in this max. ratio according to a curve that will be experimentally determined.

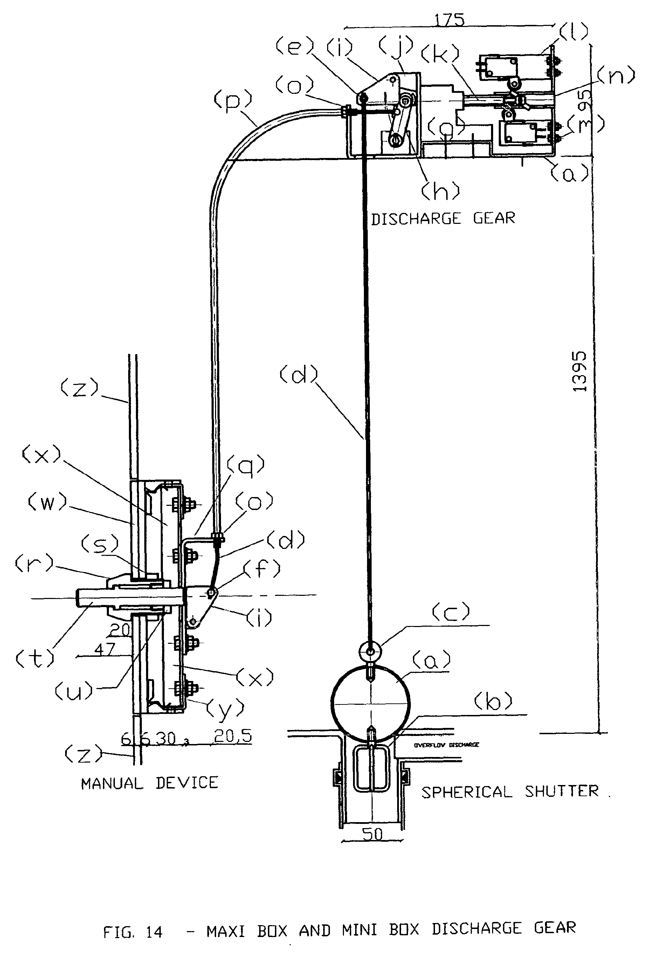

The adjustment of the opening time to the water level of the maxi boxes, so far the outlet vent concerns, will be possible with the following facilities: a special electrical - electronic circuit, a continuous level controller, a mini electrical actuator mounted outside on the top of the maxi box, and a closing device of the discharge hole, activated by the actuator (fig. 14).

Without dwelling on the electrical system that will be realized according to the plant needs, we can assert that the plant (big or small) will run as if it only had one storage tank (by the principle of the communicating vessels). So far the lifting sumps concern, the level gauges of gear and arrest of the motor-driven pump will be positioned at slightly different heights so that the first motor-driven pump starts, followed by a second one. If the level increases, a third one will start and so on, depending upon the plant size. Only one level transmitter in any of the maxi boxes will be enough to determine the different discharge permanence time in the inlet (due to the electrical actuators started one by one by low tension buttons or by photocells).

The whole automatism is based on the thousand volt Ampere (4-20 m a), proportional to the buoyancy and transmitted by a piezoresistant probe fed in c.c. at 24 V c.c., placed into the main maxi box.

The signal coming from the whole measurements (0 - 130 cm) will be transmitted by a level meter to an electronic module supplied at 24v c.c.; this will allow to get n.6 functioning thresholds corresponding to 12 outlets among which n.6 will be used by the timer linked up to the control relays by the actuators of the WC maxi boxes and n.6 by the urinals that requires longer times.

The precision of the system is ensured by the following parameters: 0.2% of the value transmitted by the level gauge and 0.05% of the electronic module.

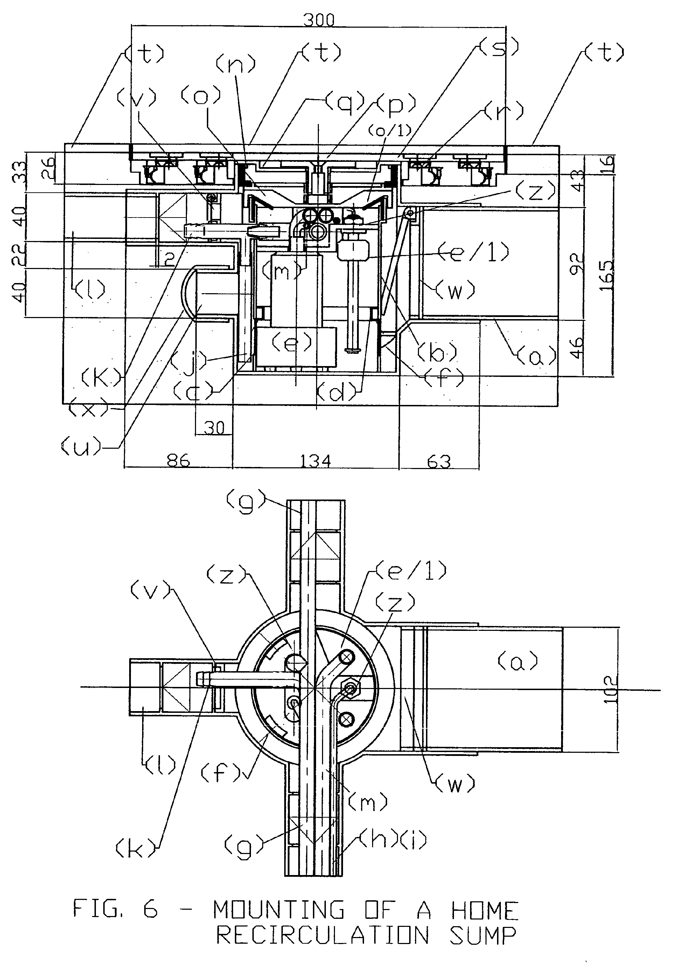

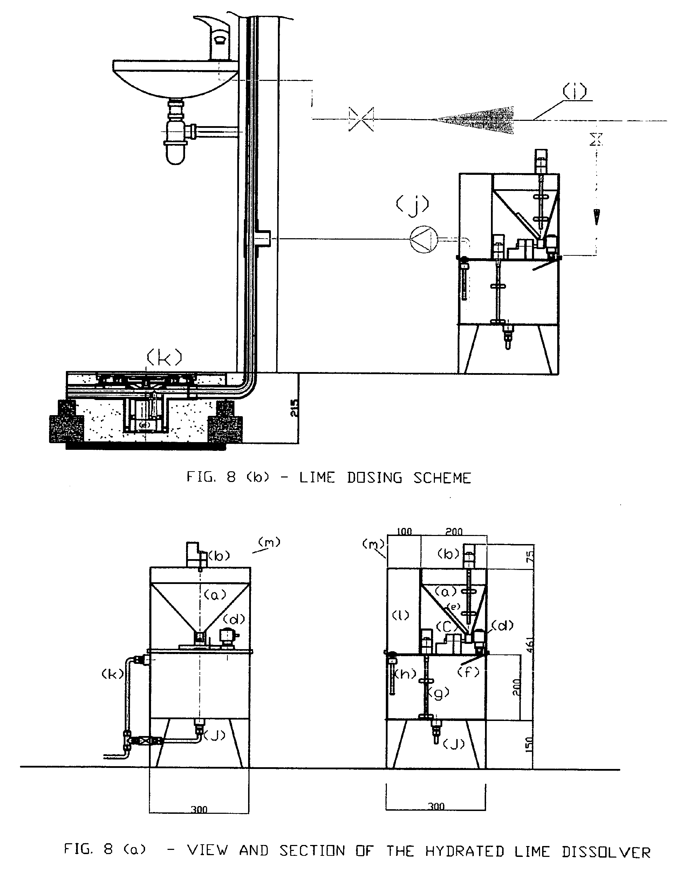

Here follows the description of the drawings in general and of those related to the single components:
FIG. 1 - typical lay out of a reclaim water plant in a public place, where the main components and the possibility of matching them together can be noticed:
(a) tubular element of the collector (fig. 4/a); (b) discharge connection at 45° (fig.4/b); (c) connection at 90° (fig.4/c); (d) end elements (fig. 4/d); (e) and (e/1), lifting and recirculation sumps (fig.5); (f) water connection to the water system for the cleaning of the main collector at the ends. A conical spraying nozzle is screwed as in 4/d; (g) water recirculation delivery; (h) rinsing maxi box (h); (i) water distribution from waterworks; (j) chemical dosing system (fig.8); (k) extractable plate (fig. 9 -10), (m) PVC tube ϕ 40; (m) discharge tube in the sewer ϕ 63; (n) discharge collecting column for grey water; (n/1) discharge collecting column for waste water coming from w.c.; (o) hot water boiler.
FIG. 2 - electro-hydraulic scheme relative to the plant on fig.1. The connections between the various sections can be noticed as described in the premises and not visible in the lay-out.
The references are the same of figure n.1 but they are now integrated with those not shown in the lay-out: (o) level transmitter as piozoresistant probe, feeding 24 V. c.c., outlet signal 4-20 mA; (p) electric control board; (q) tension transformer 220/24V c.a; (r) current rectifier 24 Vc.c. (s) circuit for the level regulation; (u) circuit for the draining regulation in the line "urinals"; (v) feeding circuit for the lifting motor-driven pumps; (w) electrical connections lines under low tension; (x) electrical connection lines 220V c.a.;

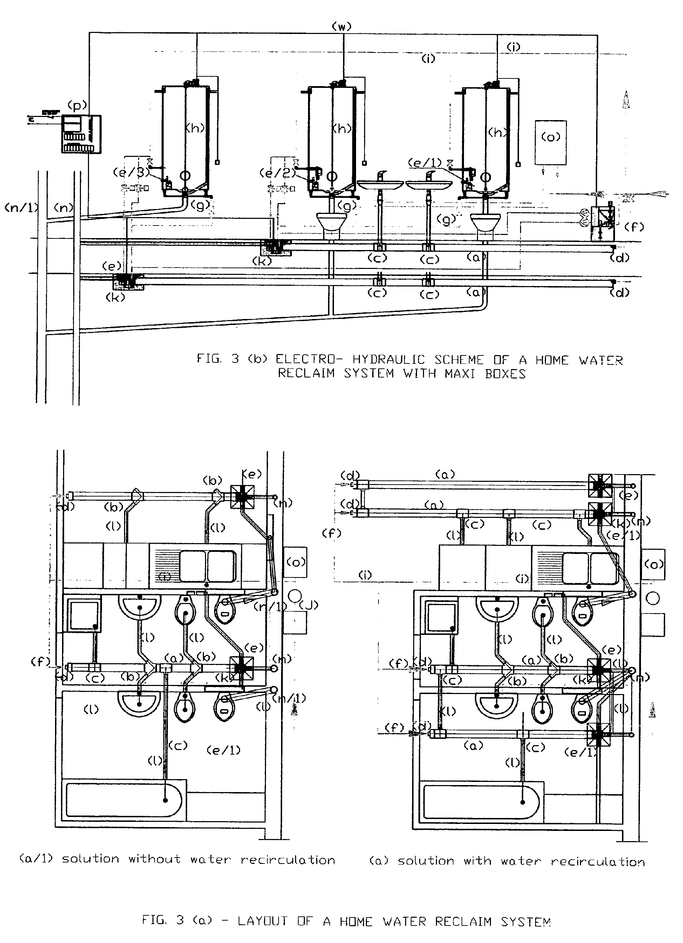

FIG.3 - it shows the layout of the first deposited patent as well as the electro - hydraulic scheme of a home plant integrated with the innovations proposed in this project. The description is not reported because the components and references are the same of fig. 1 and 2. In this case a second recirculation sump has been added as well as a sewage equalization for a treatment with coagulant; the reclaim is performed by matching the collectors sumps, as reported in the figure. The recirculation pump sends the sewage into the collector through a hole located in the frame of the non - return door (w). In this way one-way flow is created toward the lifting pump, located in the other side of the collector. A further possibility is locating the recirculation sump on the opposite side of the lifting sump in case both sludge and surnatant liquids can be discharged from there.
A further novelty is due to the presence of a second plant in the adjacent room, represented by the kitchen, even though it is not directly involved in the reclaim (for the WC cleaning, the reclaimed water from the personal hygiene is enough and less polluted than the one coming from the kitchen). This second plant has been provided only for the neutralization of detergents and other pollutants that are compatible with the required proceeding. The plants' running is the same except for the lifting pump of the kitchen. This not pipes water to the maxi boxes but to a discharge column with timed intervals (ensuring the coagulant the necessary contact time) and with the consent of the level gauge. The pump of the recirculation sump performs the same task previously described and renders the coagulant mixing easier through the connections (1). The water and the surnatant are discharged when they exceed the max level and the discharge pump has not been allowed by the timer. The sludge extracted by the ejectors will be introduced into the faecal column and will contribute to accelerate the decomposition process, once it will be channelled with the faeces.
The same scheme can be applied to the kitchens of public plants, substituting the sump on fig. 6 with the one of fig. 5, of wider dimensions.
So far the home plant concerns, the lime solution diluted at 1% for the chemical conditioning, coming from the measuring device and proportional the total consume, will be divided in three equal flows, of which two will be piped into the kitchen collector and one in the recirculation collector in order to be consistent with the statistic percentages of consume. Eventual division mistakes will be compensated in the Imhoff tank where the depuration cycle continues as described (fig. 8). It is advisable to use independent dosing plants for each room, so far public places concern.
NOTE:
The shortage of economical means has not allowed an adequate experimentation and doubts on the capability of the system to evacuate the produced sludge can arise (they will never be higher than 2 g/1, thanks to the nature of the treated water, comprised the additive).
The doubts have no reasons to exists as the system is provided with automatic and programmable cleaning interventions. The circuit can also be used in a way that eliminates such a risk: the underground circuit will be limited to the physical treatment of water, that is to say accumulation, foaming, filtration, sedimentation, sediment extraction, filter flushing, lifting to the maxi boxes.
The introduction of the coagulant solution will take place directly on the pump intake and proportionally to the pump delivery (without measuring the delivery) only during its running. In this way the complete mixing of the product will be ensured as well as no obstruction dangers occurs, because the lime hydroxide water solubility will not pass the limits (1.7 g/l for a temperature of 20°c).
The chemical reaction will take place in the rinsing maxi box. This will not have obstruction problems because is provided with a hopper bottom and with a discharge hole of 50 mm. The high speed in the outlet section will grant a constant cleaning of the closing seat while the shutter
weight and the neoprene covering will grant its seal also in case of sludge flakes.
For the WC cleaning soft, clarified and disinfected water with the presence of sludge flakes in a small concentration will be used while other discharge coming from the sumps (not chemically conditioned) will be sent to the column of the greywater.
In the maxi box a small motor - driven pump will be mounted. This will ensure a light agitation of water in order to help the chemical reaction and allow a sedimentation of the bigger sludge flakes, useful to the next depurative process.
In a home plant of a 4 people family that consume about 100 l of water per day and recover 250 l for the flushing system, the average chemical contact time between the water and the coagulant is 1 hour within 24 hours and 20 minutes during night. This is sufficient to grant the desired effect.
For the detergents neutralization of water from the kitchen the circuit is the same. The kitchen will be equipped with a maxi box, whose discharge (piped into the faecal column) will be activated automatically by a timer that will grant the chemical contact time.
FIG. 4 - water collector details and connection accessories. You can notice:
(a) the standard pipe can be cut and coupled to the other components in order to have an accumulation and collecting system before the lifting sump. The standard section will be used for the home plant as well to cut the component prices and establish a common principle of plant modularity between the two plants.
(b) discharge connection element 45°, equipped with two couplings ϕ 40 (arranged in a non - return door to be used for the collector cleaning under pressure);
(c) discharge connection element 90°, equipped with two couplings ϕ 40 (arranged in a non-return door to be used for the collector cleaning under pressure). It allows a discharge inlet in the collector and the parallel connection of the same collectors;
(d) this element allows the collector closing, by putting on the coupling ϕ) 40 a commercial cap, and a serial connection of the two lifting sumps by using the corresponding coupling on the sump;
(e) the non-return door has the same dimensions of the collector section. It is possible to build it in the internal housing of the sumps (fig. 5) and in the internal housing of the sump (fig.6) on home plants. The door occupies only one half of the frame. The other half is closed to allow the passage of the recirculation pipe in the sumps assigned to this function.
(f) the non - return door has the same dimensions of the connecting holes on the recirculation sump (home plants 40 x 40 mm or public plants 63 x 63) and has four important functions when mounted on the overflow discharge:
   determining the discharge outlet position, using one of the three sump arrangements;
   establishing the max level of the overflow discharge. It is determined by the fixed part of the containing frame;
   avoiding the passage of bad smells coming from the sewage;
   calibrate support for the passage of the sand extraction ejector;
   Both the doors (e) and (f) are built into the housing and are stabilized by a rest located in the housing and blocked by a spacer applied on the foam shield cylinder:
(g) connecting coupling for the tubular pasting elements;

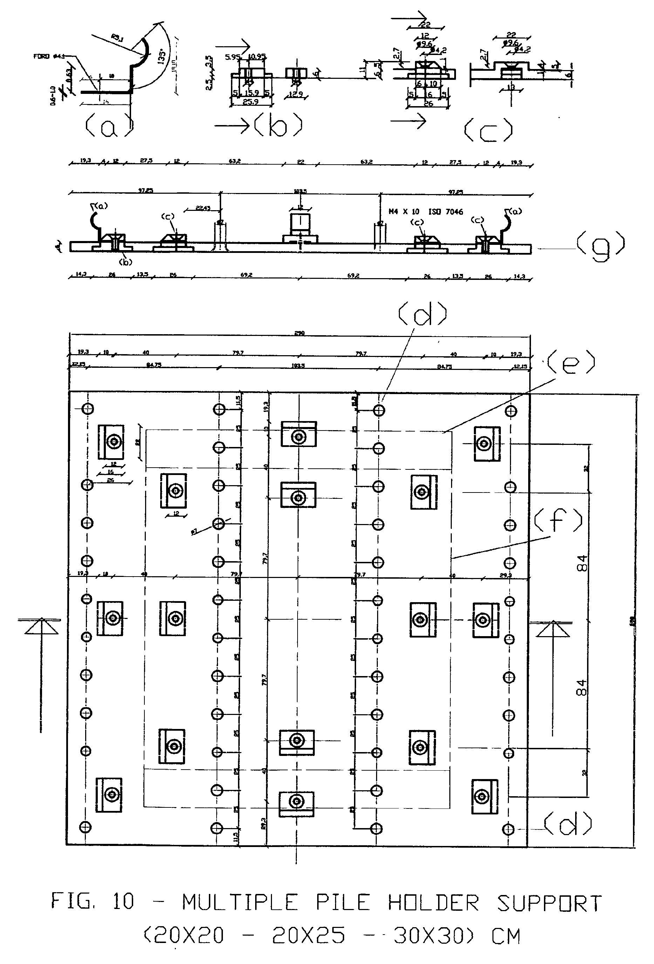

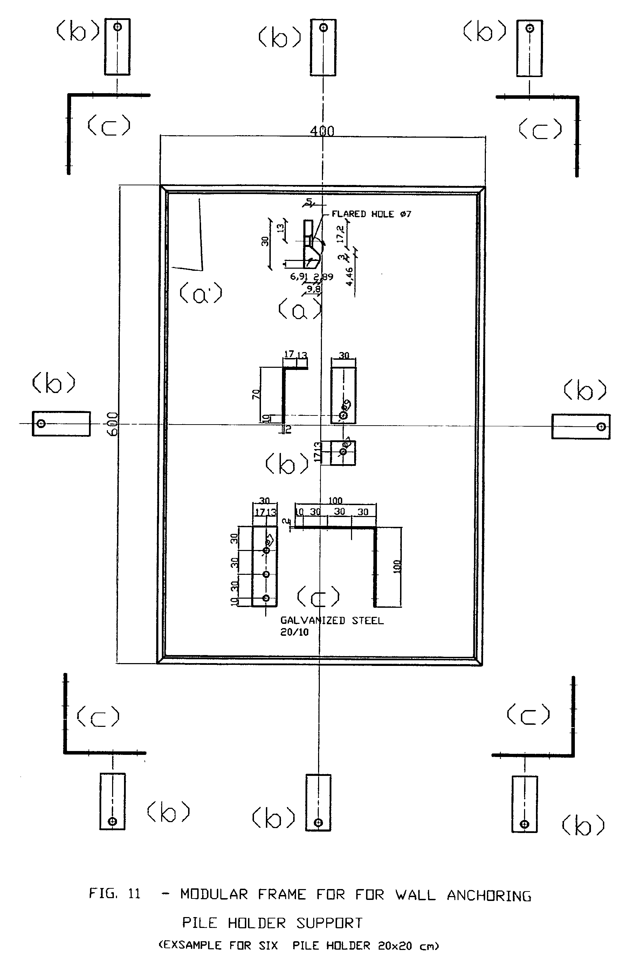

FIG. 5 - already mentioned before. It reports the whole mounting of the "lifting sumps" in longitudinal and horizontal sections. Following the water flows, the following elements appear clear: (a) the collector and a non-return door (W) mounted on its ends. Its gravity function avoids a water return in the collector during the flushing phases, as above described; (b) the foam shield cylinder allows the sump to divide the floating substances, just like the Imhoff tanks. Its circumference enters partially the closing sump cap and compresses the gasket avoiding the coming of water within the cylinder; (c) a 200 micron filtering net in polyethylene; (d) flushing rings, particulars b and e, rectangular section, on the top and on the bottom of the net, each one having 32 holes oriented with a 30° inclination toward the same net. (e) motor - driven pump for clean water with the following technical data: delivery 1/min. 100, discharge head 3.7 m, nominal power KW. 0.5, feeding 220 V mono phase, adsorbed current 1.43 A; (e/1) floating switch for the motor - driven regulation; (f) conveyor point for the sediments in the extraction point. It also avoids that water coming from the bottom could open and not close the non -return door; (g) flexible pipe for the delivery of the pump with rubber holder ¾"; (h) flexible pipe for flushing water, filtering net ϕ16 x 2 mm; (i) flexible pipe for the feeding the ejector used for the sand extraction ϕ 14 x 2 mm; (j) flexible pipe for sand extraction ϕ 8 x 1 mm; (k) ejector for sand extraction fig. 6; (19) connection to the sewage discharge; (m) submergible cable for the pump feeding; (n) neoprene gasket c shaped 16 x 12 x 4; (o) gasket compression cap; (o/l) gasket foam shield cylinder; (p) expansion screw for the cap closing; (q) traction disk ϕ 138 mm; (r) sump cap and anchor base for tile holder support fig. 10 (the other important functions later described); (s) pile holder support fig. 11; (t) floor pile; (u) serial connection coupling of lifting sumps; (v) smell protection door; (w) non - return door to the collector (a) with frame; (x) closing cap.
Having described the sump functioning we can state that it is "self - cleaner". It does not need manual cleaning. This condition allows him to be camouflaged into a room and to be placed under floor piles, as in fig. 5. The accessibility is granted by the extraction of the pile (t) and by its relative support (s) by means of the spread commercial suckers.
This solution allows a camouflage with a pile 30x30 cm, or with a pile composition of smaller dimensions. They could be cut and glued on the support (s) or reach a higher format of 33x33 cm with a light lateral sharp rise.
The FIG. 6 proposes a lifting sump on a home plant updated with the newest renovations. As for the layout the description is not reported because the component and references correspond to the fig. 5. Only the following details are added:
for economic reasons, only a feeding pipe has been used for the filtering net flushing and for the feeding of the sand extraction ejector. As a consequence all the operation will be effected contemporarily with only one solenoid valve (separate solenoid valves or manual valves can be used as well); a bracket has been provided (z) for the fixing of the mini motor - driven pump of the level gauge. They could be subject to undesired movements in the flushing phase if they were not fixed, as they are very light;
n.3 motor - driven pumps with 12 V. c.c. feeding have been selected. They have light different characteristics and are interchangeable in the sump. Here follow the single performances:

| current (A h) | 09-1.7 A | 2.0-2.5 A | 2.1-2.9 |
|---|---|---|---|
| max delivery (l(min) | 10 | 12 | 18 |
| max prevalence (m) | 6 | 6 | 10; |

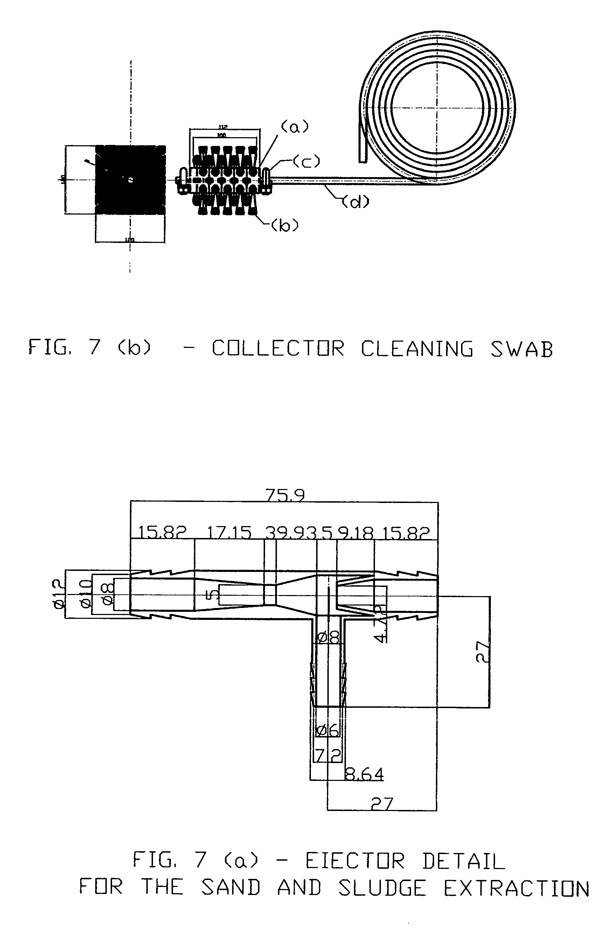

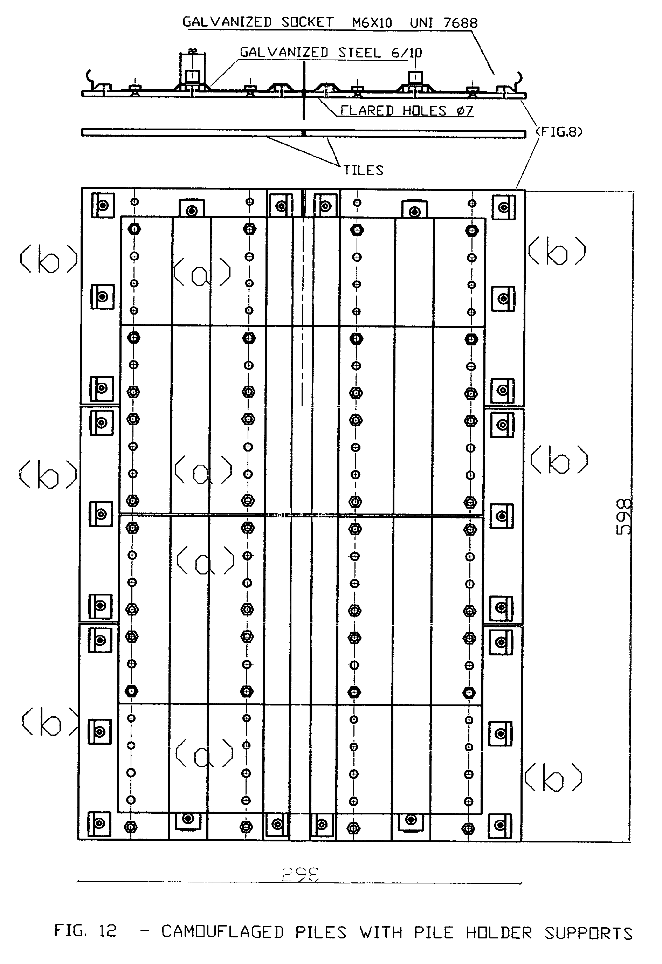

The FIG. 7 (a) shows the detail of the extraction ejector that will be used for the sand and sludge extraction from the sump (and for the water and air mixing in case compressed air would be used for the collector flushing): it is based on the Bernoulli principle that establishes how the sum of the energy forms of a fluid in movement in a closed circuit is constant. Increasing the speed the pressure decreases and vice versa. With a great section reduction the speed will be higher and the pressure will strongly decrease till when a void will be created. Its grade is proportional to the quantity of energy transformed in the section variation; this void allows a lifting of fluids and particles matched to the place where the phenomena is generated. The system is commonly called Venturi effect.
The Fig. 7 (b) shows the detail of the cleaning swab, used for special maintenance. It can be inserted in the collector after the removal of the lifting or recirculation sump's door. It is made up of: (a) PVC support, (b) synthetic bristles, (c) clamps for metal cable, (d) cable in galvanized cable.
The FIG. 8 shows the plant for lime dosing and dissolution.
It is a small plant for the chemical conditioning of sewage and it focuses on the phosphorous precipitation bringing beneficial effects to the same recirculation.
The conditioning takes place by adding a coagulant to the sewage. It is lime hydroxide, also called lime (hydroxide), alum or aluminium sulphate hydrate, chloride or ferric sulphate hydrate. The main component is lime and it must be always present. We refer to lime in the dimensioning calculation while other components my be chosen in special cases according to the water analysis. The hydrated lime reacts with the alkalinity of refluent water independently from the phosphates quantity and produces calcium carbonate, the main responsible of the S.S. removal (suspended solids): Ca(HCO3)2 + Ca(OH)2 → 2CaCO3 ↓ + 2H2O.
When the pH of the refluent water becomes higher that 10 - 11 by adding lime, the overplus calcium ions react with the phosphates and precipitate in hydroxidyapatite (it is a mineral present in bones and in some rocks and is made of 60% calcium, 30% phosphorous, 10% oxygen and hydrogen): 10Ca²⁺ + 6Po₄ ⁻³+ 20H⁻ ↔ Ca₁₀ (PO₄) * 6(OH)₂↓
Sludge and sediments produced with both reactions above described as well as other secondary minerals will be collected in the recirculation sump. They will be then extracted from the hydraulic ejector and piped into the faecal columns, toward the Imhoff tank, before being thickened. The process will not cause bad smell as it occurs in a basic place.
The quantity of lime required can be approx. 1.5 the alkalinity in mg/l of CaCO₃. Considering a medium alkalinity value corresponding to a medium value of 150 mg/l of CaCO₃, the calcium requirement will be of 225 mg for a single litre of treated water. This value will be rounded off 250 mg/l, considering the impurities and particles still present in the lime.
As the delivery is very small, a lime solution of 1% has been used. This will not cause aspiration problems to the pump. After a closer experimentation we could increase the lime milk concentration. For two plants, for ex., we could have the following conditions:
a) A home plant recovers 250 litres a day (for a 4 members family) and consumes about 1.0 m³, comprising the non - reclaimed water conditioning discharged from the kitchen. It needs 250 gr of lime a day and 25 litres of dosing water, partially recoverable from the recirculation. If we use the coagulant solution directly in maxi box, we need only 75 gr. of lime a day.
b) A public plant that recovers 5 m³ a day needs 1.25 Kg like a day and 125 litres of dosing water, totally recoverable through the recirculation.
The dissolver shown in fig. 8 (a) allows a 10 kg load of hydrated lime and, in case it would be used for the two plants above mentioned, it could have an autonomy of about 40 o 160 days (on a home plant) and of 8 days (on a public plant). We assume that a maintenance staff is available. It will be composed by the following parts: (a) stocking hopper; (b) lime powder agitator (in order to avoid a thickening). N.6 rev./min., gear 0.5 A; (c) dosing screw n.12 rev/min., gear 0.5 A; (d) feeding water electrovalve ¼"; (e) electrical resistance for the absorption of the granulate humidity, 10 w with thermostat; (f) hydration chute fed by the electrovalve water d, on which powder fells once out of the hopper; (g) agitator for lime milk n. 500g/min., gear 2A; (h) level gauge for the solution reinstatement (it allows the opening of the electrovalve and the movement of the powder feeding screw); (i) overflow discharge, (j) bottom discharge; (k) electric control board; (m) protection covering (it contains all the control board and the parts in movement) thought for the children safety in the home applications.
The dosing scheme on fig. 8 (b) uses the same identification letters for a volumetric counter with 24 v c.c., having an outlet signal in milliampere, and is associated to a dosing pump that takes the product from the collector and pipes it into the recirculation sump.
In order to have a well diluted solution, ready for the use and constant in the composition percentage, the level gauge will be programmed to start when 7.5 litres have been consumed within 30 min functioning on a home plant and 3 min on a public plant. The re-establishment of the 7.5 litres should happen within 1 minute in order to face any problem. The screw will have a hydrated lime delivery of 75 gr/min. (250 mg/1 * 3 min. * 100 It/min. /1000).

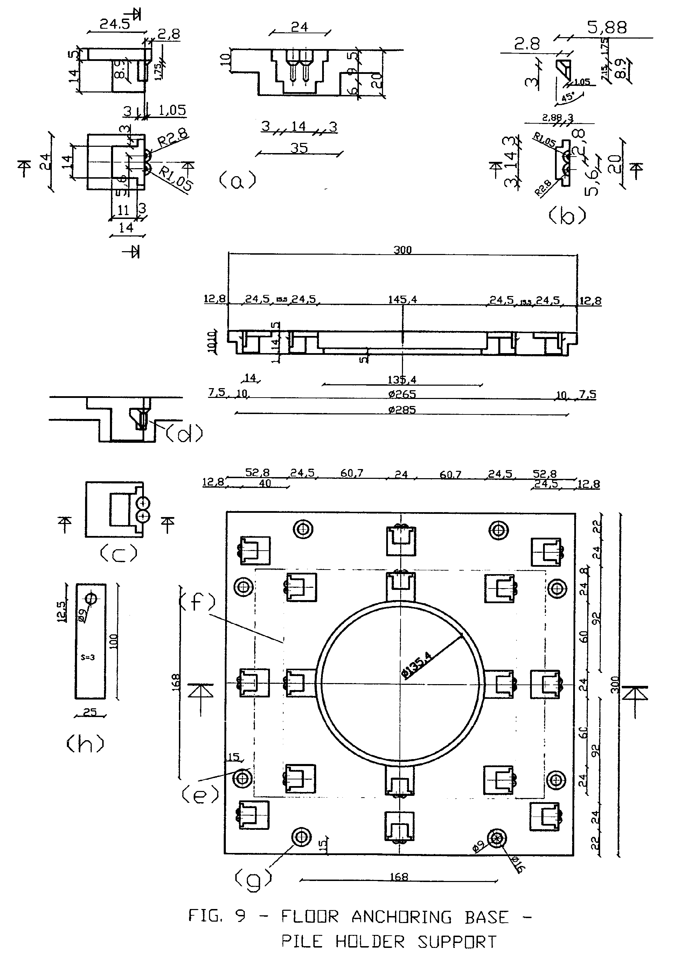

The FIG. 9 shows the details of the anchoring base of the piles holder supports (fig. 10). It covers the recirculation sumps on public and home plants (fig. 5 and 6) together with the accessories m, o, p, q that differs for the two tasks, as shown on fig. 5 and 6. The detail is in plastic material and allows with the pile holder support on fig 10, a sump camouflage with piles of 20 x 20 cm. 20 x 25cm and 30 x 30cm. It is easily adaptable to the 31,5 x 31,5 and 33 x 33 cm formats as well. The anchorage occurs through the stainless steel clamps of the support that are coupled in the sumps of the basis. The drawing shows the following details: (a) the sump detail; (b) the detail of the anchoring nib to be mounted on the sump as it can not be realized in a single piece; (c) and (d) the mounting detail of the nib (b) in the sump (a) and its fixing with two self threading screws length ϕ 2.9, 6.5 ISO 7050 stainless steel; (e) the pile shape 20 x 25 cm; (f) the pile shape 20 x 20 cm; (g) the holes for the mounting of the anchoring clamps in the cement block; (h) detail of the anchoring clamp.
Looking at fig. 5 and 6 we can notice that the access to the sump can occur through a pile (t) and its support (s) removal by means of a common commercial sucker and loosing the screw (p) that presses the gasket (n). After these operations, as in the case of fig. 5, the basis that serves as a cap can be raised. As in fig. 6 only the central part has to be raised (details n,o,p,q) while the basis is depth in the cement block and in the sand of the whole walls by means of the anchoring clamps (h).
The FIG. 10 shows the multiple piles support for those piles having as dimensions 20x20cm, 20x25cm and 30x30cm, as well as the format 33x33 cm without fittings, both on the wall and on the floor. It is equipped with anchoring clamps. A multiple function has been provided in order to avoid single moulds for single pile formats. The formats of inferior nominal dimensions will be cut along the apposite lines, as shown in the figure, while the bigger formats will be fixed with a lateral sharp rise.
The clamps number per format is 8 but not all the applications require the same extraction force. Those on the floor require a higher force in order to avoid its movement due to people's weight; those on the walls require an inferior force and an inferior number of clamps. This is the reason why the clamps are interchangeable, fixed with screws, dismantled and of various sizes (from 6/10 till 10/10 mm). Special care has been turned to the floor application that allows to embed the clamp support fixing in the anchoring sump for a higher stability. This support is like a spacer when tanks and flushing boxes are covered. In this ways an air chamber is formed between the tank and the covering avoiding a condense formation of the walls. The drawing shows the following details: (a) anchoring clam derived form a stainless steel ribbon width 12 mm, thickness 0.6mm - 0.8 mm - 1mm; (b) thread plaque M4 in light alloy; (c) plaque and clamp housing; (d) flared holes ϕ 7 for a supports coupling, see fig. 12; (e) cut shape 20x25cm format; (f) cut shape 20x20 cm format; (g) mounting section of the spline with a plaque in the support, screwed with stainless steel M4 x 10 ISO 7046.
The FIG. 11 shows the frame for the wall anchoring of the support caps (fig. 10); this frame differs from the previous anchoring system because the whole border has a shaped section similar to the linking nib and has no fixed anchoring positions. The shaped section can be mounted in the sumps and can be used both with single piles and with multiple compositions, see fig. 12. With the other anchoring sumps it allows a more complete linking of the pile supporter to the wall. The drawing shows the following details: (a) the border section is in plastic and has a mounting hole; (b) the anchoring clamps for the galvanized - steel wall; (c) union element in galvanized - steel for the frame composition.
The FIG. 12 shows an example of multiple support composition for removable piles (b) associable to the compatible frame (fig.11); this solution is interesting for covering the hydraulic connections as well as the interception valves, electric equipments, distribution collectors of the hydraulic and heat plants, substituting those in plastic or plate commonly used. The pile holder supports are coupled with a panel of pre-printed shaped plate, as if they were an only one big pile. The internal clamps are not mounted and the connection will be effected with the peripheral clamps in the modular frame. The composition described in the drawing is made of n.6 pile holder supports and n.4 coupling plates. Further combinations are anyway possible for each pile format.

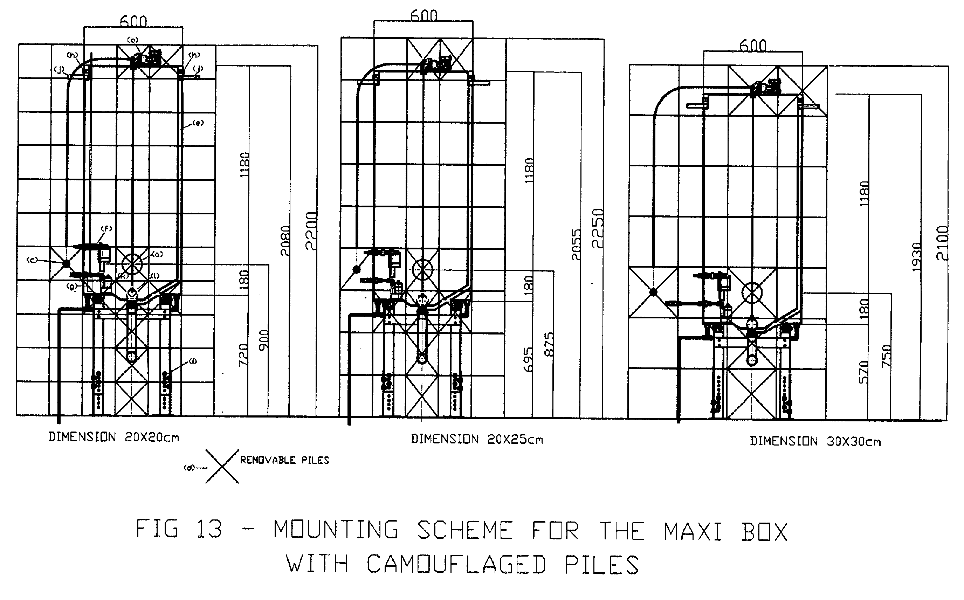

The FIG. 13 shows and example of a maxi box installation with three different pile coverings on the walls. The mounting height of the maxi box differs on any covering. This is due to the plant camouflage conceived with the same maxi box and tries to render it totally invisible. The camouflage is due to the assembly of the special "removable" piles (d) (fig. 10) in those positions where an inspection access or a facilities maintenance is necessary. The automation does not require manoeuvring facilities in full view. The necessary positions for the before mentioned access are: the porthole (a), the top, where the control gear is mounted on (b), the eventual driving button (c). Other positions can be inspected at the users' discretion. The criteria used to render eventual accesses possible, after the piles' dimensions, are the following:
to centre the porthole position (a) with the centre of an extractable pile (d) starting from the floor. This height varies with the format and dimensions of the pile selves. In the examples shown in the drawing we can notice three different heights for the portholes: 900mm, 825mm and 750mm. Superimposing the three figures we can notice that the control gear (b) (whose base is 1.180 mm from the porthole centre) is wholly accessible by removing the marked piles. In order to render the piles extractable (d), the anchoring sumps have been obtained for pressing (fig.) on the surface of the tank's wall. The pile out of the maxi box surface is anchored to a frame (fig.11) and placed next to it, in the position required. The components for the camouflage allow the use of the three most common piles formats without adjustments and with a simple bricolage they can be adapted to other piles formats.
Other important features are:
the overflow discharge (e) included in the tank's structure. It flows below the discharge buffer ensuring atmospheric pressure in the discharge pipe, also when the buffer is closed, and avoids the sucker effect in the lifting phase of the buffer self;
the reserve feeding with the water system as well as the filling valve (f) are in a low position to grant automatically the performances of a common discharge box, without further mechanisms, in case the plant is out of order or recovery water could miss. The level transmitter probe (g) is fed at 24 V c.c. (one for plant); the feeding connection (h) is located on the top on both sides and could be used with the water feeding (without reclaim plant) in those places where the non-continuous service of the waterworks requires water reserves;
the inferior support frame (i) has adjustable legs in order to allow the necessary adjustment for the plant camouflage with the three piles formats, shown in the figure. The superior stabilization of the maxi box in the wall is due to two blind threaded fittings 1/2" (J) that allow clamps to be screwed. These are obtained form a pipe of such dimensions. The level transmitter piezoresistant probe is shown in the (k) position while the float shutter in the (1) position.
The FIG. 14 shows the whole fixing of the discharge gear. The system is simple and reliable: its hydraulic seal is left to the weight of the spherical shutter and to its neoprene covering.
The selected actuator for the discharge gear functioning is a mini screwed one. Here follow its features:
feeding 24v/w, nominal power 14w, current 0.6A, stroke 20 mm, speeding 11 mm/sec, protection IP40, strength 27 N, weight 450 gr.
As an alternative, an electromagnetic actuator with the following features can be used:
feeding 12 v/cc, nominal power 26w, current 2.2A, stroke 20 mm, strength 20N, weight 700 gr.
A manual device could be installed contemporarily to the electromechanic device. It should have a mechanical button that does not interfere with the previous one. They use the same mechanism but they are independent because the shutter closes the discharge with the own weight, independently from the driving gear that opened it.
The urinals will be fed by the maxi boxes as well because they are normally activated by mechanical, timed buttons or by opto - electronic devices with an established interval of 6 - 8 seconds. They can be excellently substituted with the discharge mechanism of the above mentioned maxi box.
The lifting movement of the shutter is obtained by transforming the horizontal stroke of the actuator stem trough the levers shown in the figure:
the stem stroke is adjustable. In the figure a stroke of 17 mm corresponds to a shutter lifting of 14.19 mm and to a horizontal movement of 12.56 mm. It corresponds to the circumference arc that describes the suspending point of the lever (i). The cord of this arc can be considered to be equal to the weight to be lifted (1kg) and is inclined of 48° toward the horizontal plane. As a consequence the vertical component that represents the lifting strain is 1 x cos. 48° = 0.669 kg.
The strength that raises the shutter acts in a horizontal way through a roller frame and the lifting strength is 0.669 x µ [(coefficient of rolling friction 0.12 (metal / metal without lubrication (0.3) x the ratio of the pivot ray to the external one of the roller (0.4) J = 0.080 kg.
The initial strain is due to the weight to be lifted x the resistant arm x the friction coefficient / thrust arm = 1 x 14.5 x 0.12 /26.5 = 0.065 kg (it increases by increasing the resistant vertical component).
In case of manual devices the ratio between the push strength and the resistance strength improves considering the lever effect of the actioning button: the ratio between the arms is 14.4 / 21.52 = 0.672. The lifting strength is 0.080 x 0.672 = 0.053 kg while the initial one is 0.065 kg x 0.672 = 0.043 kg.
The strength ratios described diminish during the closing discharge phase, when the stem telescopes or the manual button is released as the shutter weight must bring the operating levers and the shutter self back to the initial position. This is very important especially with the manual gear because the shutter fell is avoided even though the stroke is limited to 15 mm: the phenomenon does not exist in case of electrical running as the brake is due to the folding back stem speed (11 mm/sec).
Here follow the mechanisms' components:
(a) cast iron spherical shutter, covered with neoprene, for the closing of the discharge hole. Total weight about 1 kg; (b) guide cage and brass shutter centring; (c) brass eyelet for the shutter suspension; (d) stainless steel string ϕ 2; (e) clamp for the suspension string; (f) clamp for the string traction; (g) screw electrical actuator; (h) lever with inferior fulcrum and superior roll; it can be operated from the electrical actuator on one side, and from the string of the manual device from the other side. The lever movement opens the discharge lifting the shutter through the square lever (i); the folding back of the actuator stem or the release of the manual button close the discharge for the effect of the shutter weight trough the same mechanisms; (i) square lever for the shutter suspension; (j) stirrup for the lifting devices; (k) stem with trapezoid screw ϕ 8; (1) stirrup with electrical stroke end for the shutter opening; (m) stirrup with electrical stroke end for the shutter closing; (n) slider for operating, stroke end cams (pipe ϕ 13.5 sp 1.8 mm with inferior and superior groove of 2 mm); (o) stirrup for the electric actuator and control devices; (p) flexible, steel sheathing ϕ5, thread carrier for a manual actioning (it is commonly used on cycles and motorcycles for the cable passage for breaks and change gear); (q) mounting stirrup for a manual actioning; (r) thread button holder bush, mounted on a pile passing hole; (s) thread metal nut for the bush blocking (r); (t) discharge button; (u) thread sleeve for a button directory; (v) terminal for the fixing of the thread carrier M5 sheathing; (w) extractable pile with relative support (fig. 10). Its removal allows the access to the actioning device; (x) stirrup support section q; (y) stirrup for the section x fixing; (z) fixed covering piles.
We can notice that the carrier stirrup of the lifting device (J), the electronic actuator (o) and the manual device (q) are independent. The system allows to add a manual and electrical connection in a successive phase, outside the maxi box.

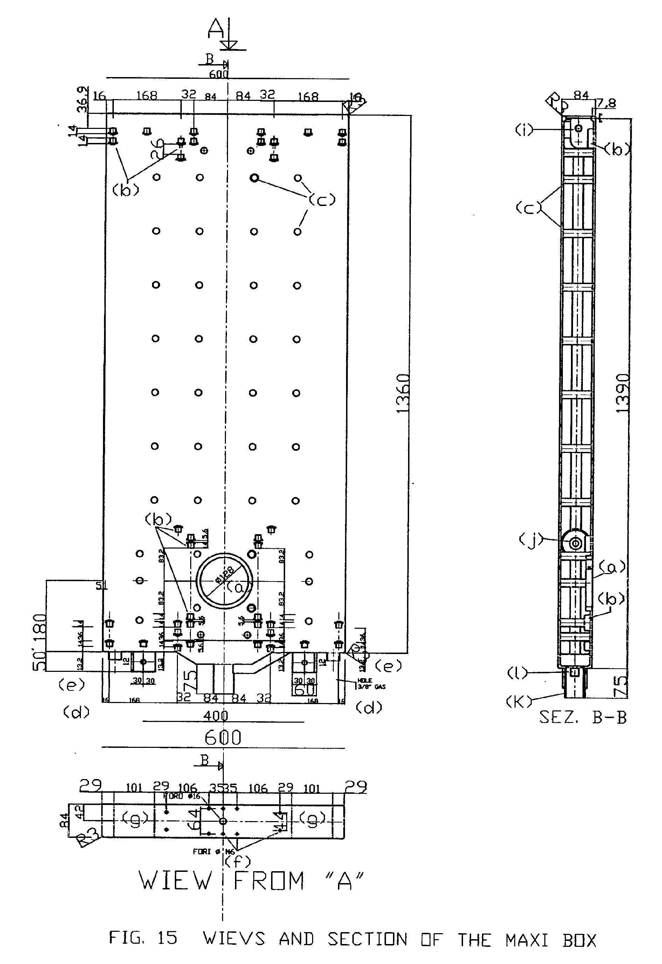

The FIG. 15 shows the building details of the maxi box, whose functional features have already been described with the fig. 12. We can notice:
(a) porthole access for the shutter and restoration valve mounting; (b) anchoring sumps fig. 8; (c) wall connection supports; (d) overflow discharge; (e) feeding connections for the reclaimed water ϕ3/8"; (f) mounting holes of the gear device. We can notice how their symmetry allows a double orientation of the device; (g) removable caps to access to the superior filling valve. Both caps are blocked with the anchoring clamps fig. 10 (a) and the superior profile of the accessible spaces is identical to fig. 11 (a); (h) bottom discharge; (i) feeding connection for the superior water system; (j) feeding connection for the inferior water system.

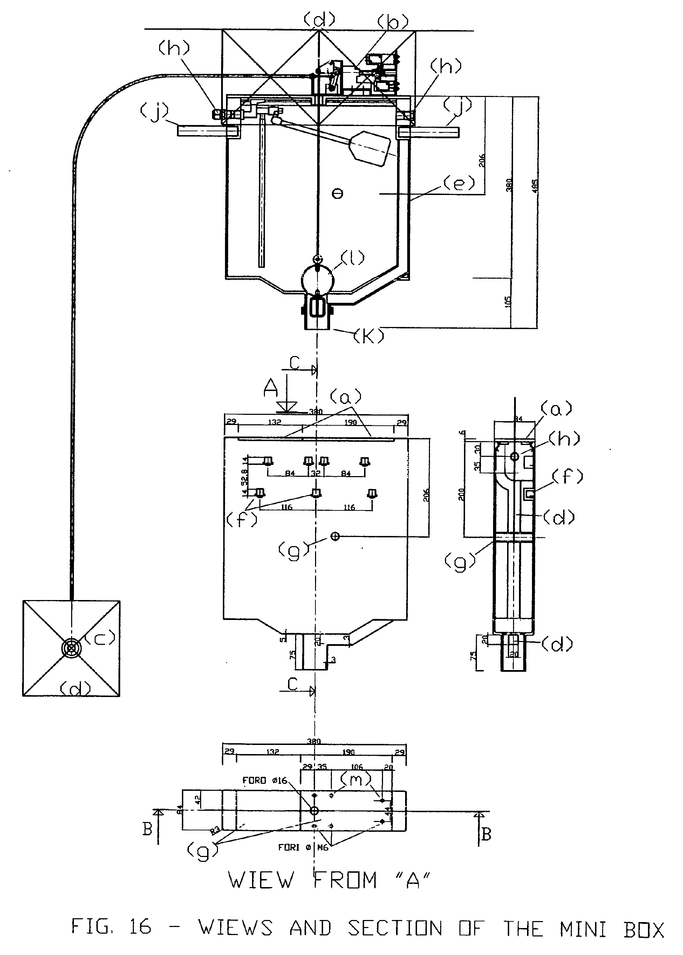

The FIG. 16 shows an installation example and building details of a mini box.
The mini box differs from the recirculation plant here proposed but comes from the building details of the maxi box, from its actioning devices and from the plant camouflage. The mini box is the miniature of the maxi box: the details are identical as well as the gear device and the location of the anchoring sumps for the camouflaging piles.
Compared to the common flushing boxes it has the following advantages: smaller overall dimensions thanks to the accessibility from the top that does not require holes on the front wall to install the actioning, inspection and maintenance devices;
possibility of a complete camouflage back to the covering piles;
possibility of installation in a top position allowing a higher discharge efficiency thanks to the gear devices;
possibility of a double gear installation of which one is used for the total tank discharge (electric actuator) and one for the partial discharge: manual button (its release closes the discharge).
Here follow the details of the figure. They keep the same identification letters in order to underline the similarity to the maxi box:
(a) removable cap in two pieces, kept in the seat with the anchoring clamps system fig. 9 (a) and the superior profile of the containing wall is similar to fig. 10 (a). We can notice that the mounting holes of the gear device are located on a cap. Inverting the position of the caps the device orientation can be changed as well; (b) electrical gear device; (c) manual actioning button; (d) removable piles; (e) overflow discharge incorporated in the tank structure; (f) anchoring sump for pile support, fig. 10 (c); (g) connection reinforcement of the walls; (h) feeding connections of the filling valve. In this case it is equipped with a gauge so that the overall dimensions are smaller in height compared to the diaphragm valve; (i) spherical shutter; (j) thread connections ½" for support clamps in the wall; (k) bottom discharge.
The "mini box" does not follow the same logic of plant described. Its use has to be checked in the spread home plant engineering. The other components described and used in this project can find independent applications:
(a) the recirculation sump can be used, as shown in the fig. 5, as a lifting sump for those places located under the roadway where a flooding danger can occur (basement recreation rooms, cellars, garages, offices, etc...) and needs a camouflage solution for aesthetic purposes;
(b) the ejector (fig.6) could be installed on all discharge sumps where the accumulation of sand, detergents and other substances causes a plague in the discharge: a periodical extraction through a special valve and the introduction of pressure in the water prevent expensive maintenance interventions;
(c) the maxi box (fig. 13 and 15) with the overflow valve mounted on the top through the special connection, can be used with the water system where a frequent interruption of water is expected;
(d) the anchoring base for the pile holder supports (fig.9) covers the recirculation sumps as in fig. 5 and 6 and can be used to cover the common home sumps, allowing their camouflage with piles and substituting the common, unaesthetic metal plates spread in all homes;
(e) the lime dissolver can be used on small depuration plants;
(f) the non-return and anti - odour doors can be mounted on a new generation of sumps avoiding the exhalation coming from the discharge pipes and a flooding danger, so far the places located under the roadway concern.

## Claims

1. Original conception of the chemical neutralization system on a lime basis for the polluting power of detergents. It is a miniature and a camouflaged plant that allows an immediate intervention where the pollution is produced and before water is discharged avoiding the diffusion of damaging elements, especially phosphorous. The basic sludge produced are used to improve the efficiency of the Imhoff tanks avoiding the acidification of their self sludge.

2. Original conception of the reclaim drainage, partially treated with physical and/or chemical procedures directly where it is produced and before its discharge, for WC and urinals that do not need completely depurated water. The system allows a cut of 25-30% on our pro - capital home consumption and of 45 - 50% on local places. Each m³ of reclaimed water costs very few thousandths of € (about 15).

3. Originality of the PVC collecting batch of water. It is a simple pipe with rectangular section that can solve many public and home layout problems, when associated to other multi-functioning elements. It can also offer a valid accumulation for the water to be reclaimed and allows the contact time of the coagulant with those liquids, necessary to the pollutants precipitation.

4. Originality of the 45° PVC discharge connecting element - "fig 4 (b)". It allows the connection to the discharge collector on both sides, also when they are not in line and the mounting of a non - return door for the collector cleaning under pressure.

5. Originality of the discharge connecting element to the PVC collector "fig 4 (c)". It allows a modularity of the system, the parallel connection of more collectors or the fixing of a non-return door for the collector cleaning under pressure.

6. Originality of the element "fig 4 (d)" that allows the collector closing through a commercial cap located on the coupling ϕ 40. It also allows a fixing of the manual flushing device in the collector or a serial connection of the lifting sumps using the special coupling located on home and public sumps.

7. Originality of the PVC recirculation sumps (fig. 5 and 6). They are built with the same criteria but have different dimensions and are available with an internal chute that pipes the sediment substances from the opposite side. It is also a spacer for the internal monitoring of the internal foam cylinder protection, concentric to the same sump. Connection to the batch collector with rectangular section; cylindrical coupling for a serial connection of more sumps, lateral branch line for plant connections with a square section for the fixing of non - return and smell-protection doors.

8. Originality of the square or rectangular door sections. They are equipped with a frame "fig.4 (e) and (f)" that can be inserted in the inlet branches or in the sump outlets. As already said on point 7 they can have non -return, anti smell functions as well as discharge spillways, independently from their dimensions.

9. Originality of the foam protection cylinders in polypropylene o similar material "fig.5 (b)" and fig 6 (b)", located in the recirculation sump, conceived with the same criteria and having different dimensions. They have a filtering, incorporated net and one or two tubular rings with rectangular section and hydraulic connection to flush the net self. The cylindrical wall ends on the top with a housing for a circular gasket with L section as a closing cap seal of the sump and removal sectors for the passage of pipes and cable.

10. Originality of the anchoring base to the floor of the pile holder support. It is in polypropylene or similar material as shown in "fig. 9" and "fig. 6". It is anchored to the floor, has the functions conceived while in "fig.5" it also has a sump cap functioning. It is removable and integral part, together with other accessories, of an expansion cap that closes the sump hermetically. The detail, associated to the pile supporter holder (fig. 10) can be used to cover the common home sumps substituting the unaesthetic metal plates present in every home.

11. Originality of the anchoring system of the pile holder supports, made of:
a) a part applied on the pile holder support: a shaped and perforated steel clamp, inserted in the pile holder support; a light alloy plate, shaped, threaded and inserted in the opposite side of the clamp, in the same housing of the fissure; a blocking, stainless steel screw with flared head; housing in the pile holder support that allows a clamp fixing and its blocking through a thread plate and through a screw;
b) a part applied to the anchoring base: a square sectioned sump with two lateral tongues, obtained through the pressing of the anchoring base; a clamp coupled fixable on the clamp and inserted in the tongues through self threaded screws.
The anchoring base, apart from the one shown on fig. 9, can be any surface equipped with sumps (maxi and mini boxes surfaces); the clamps quantities, anchoring sumps and their disposal on the anchoring surface can vary for the different applications.

12. Originality of the plastic section that allows the anchoring of the pile holder supports on the walls to camouflage the facilities. This section reproduces the nib profile (point 11) and allows the realization of anchoring frame useful to single pile holder supports or to multiple compositions of the same, coupled with shaped plates.

13. Originality of the ejector application fed with water or compressed air independently from its dimensions for the extraction of sand, sludge and sediments from the sand, rendering the sumps self cleaner non only in the described application.
The ejectors can be inserted in any kind of home or industrial sump to effect a periodical flushing without a direct access

14. Originality of the maxi box in the recirculation plant (without this it would have been probably never conceived). An accumulation for the non - continuity of the reclaim and recover of water is very important;
the maxi box allows a great economic and space cut thanks to the accumulation and rinsing functions that render accumulation tanks, relaunching pumps with accessories and their housing not necessary. The maxi box can be also used with the water coming from the main system were a non - continuous water service is not provided using the feeding connections located on the top.

15. Originality of the mini box that allows a reduction of the overall dimensions (380 x 386 x 84 mm) using the special conceived construction suggestions and the gear system. The gear devices are external and camouflaged with extractable piles. It can be installed in a higher position as well in order to increase the discharge efficiency.

16. Originality of the opening and closing system of the discharge applicable to the maxi and mini boxes, based of the shutter weight. It allows a timed discharge, adjustable automatically with electric - electronic circuits or with the simple release of a manual button. The system allows an alternative between the electrical and manual starting and their coesistence on the same box that do not interfere even though they act on the same mechanisms. The discharge closes thanks to the shutter weight, independently form the action that opened it.

17. Originality of the fixed, overflow discharge of the maxi and mini boxes. It is piped downstream the shutter and ensures the atmospheric pressure in the discharge phase also when the shutter is closed and avoids a suck effect in the lifting phase of the shutter. Without an overflow discharge conceived in this way, the realization of this discharge system (pos. 16) could have not been realized.

18. Originality of the miniature, disposition and conformation of the lime milk preparation plant, fig 8(a). It allows a dosed lime dissolution in water, its suspension with the agitator, a light agitation of the granulate in order to avoid an accumulation, its heating for the humidity absorption, a gear device at low tension and the direct current small motors.
